# EUROPEAN PATENT APPLICATION

(11) **EP 4 815 248 A1**
(43) Date of publication of application: **30.09.2026**
(21) Application number: 24896544.4
(22) Date of filing: 26.11.2024
(51) Int. Cl.: H02J 7/00

(54) **VOLTAGE EQUALIZATION CIRCUIT AND VEHICLE**

(30) Priority: 30.11.2023 CN 202311641646
(71) Applicant: BYD Company Limited, Shenzhen, Guangdong 518118 (CN)
(72) Inventor: GAO, Wen, Shenzhen, Guangdong 518118 (CN); LI, Guizhong, Shenzhen, Guangdong 518118 (CN); CHEN, Yuxi, Shenzhen, Guangdong 518118 (CN); LI, Tao, Shenzhen, Guangdong 518118 (CN)
(74) Representative: Taor, Simon Edward William
(86) International application number: PCT/CN2024/134691
(87) International publication number: WO 2025/113457

(57) **Abstract**

A vehicle including a voltage equalization circuit, the voltage equalization circuit including a controller, a first motor electric control assembly, and a first battery module; the first motor electric control assembly includes a first motor winding and a first bridge arm converter, and the first battery module includes a first battery and a second battery connected in series; the controller is connected to the first bridge arm converter and is used, when the voltage of the first battery and the voltage of the second battery are unequal, for causing the first motor winding to charge or discharge by means of control of the first bridge arm converter, so as to equalize the voltage of the first battery and the voltage of the second battery.

## Description

### CROSS-REFERENCE TO RELATED APPLICATIONS

The present disclosure claims priority to Chinese Patent Application No. 2311641646.3 filed on November 30, 2023, entitled "VOLTAGE EQUALIZATION CIRCUIT AND VEHICLE", which is incorporated herein by reference in its entirety.

### FIELD

The present disclosure relates to the technical field of vehicles, and in particular, to a voltage equalization circuit and a vehicle.

### BACKGROUND

With the development of vehicle technology, more and more low-voltage loads are connected with a low-voltage power supply system, and the power of some low-voltage loads is also greater than general low-voltage load power. A 12V low-voltage power supply system is difficult to meet the increasing demand of low-voltage loads. A 48V low-voltage power supply system is added to the vehicle to supply power to high-power low-voltage loads. However, the added 48V low-voltage power supply system is connected with the vehicle power supply through an added isolation DC/DC converter to convert the high voltage into 48V low voltage. The added isolation DC/DC converter increases the manufacturing cost of the vehicle.

### SUMMARY

In order to achieve the above object, the present disclosure provides a voltage equalization circuit and a vehicle.

A first aspect of the present disclosure provides a voltage equalization circuit, including: a controller, a first motor electronic control assembly and a first battery module; the first motor electronic control assembly including a first motor winding and a first bridge arm converter, and the first battery module including a first battery and a second battery connected in series;
the controller being connected with the first bridge arm converter and being configured to, when a voltage of the first battery and a voltage of the second battery are unequal, charge or discharge the first motor winding by controlling the first bridge arm converter to equalize the voltage of the first battery and the voltage of the second battery.

In an embodiment, a first end of the first motor winding is connected with a negative electrode of the first battery and a positive electrode of the second battery, and a second end of the first motor winding is connected with a midpoint of the first bridge arm converter;
a first end of the first bridge arm converter is connected with a positive electrode of the first battery, and a second end of the first bridge arm converter is connected with a negative electrode of the second battery;
the controller is specifically configured to, when the voltage of the first battery and the voltage of the second battery are unequal, control an upper bridge switch transistor and a lower bridge switch transistor of the first bridge arm converter to be alternately turned on to alternately charge and discharge the first battery and the second battery.

In an embodiment, the voltage equalization circuit further includes: a second motor electronic control assembly and a second battery module, the second motor electronic control assembly including a second motor winding and a second bridge arm converter;
the controller being further connected with the second bridge arm converter and being configured to, when the voltage of the first battery module and the voltage of the second battery module are unequal, charge or discharge the second motor winding by controlling the second bridge arm converter to equalize the voltage of the first battery module and the voltage of the second battery module.

In an embodiment, a first end of the second motor winding is connected with a negative electrode of the second battery module, and a second end of the second motor winding is connected with a midpoint of the second bridge arm converter;
a first end of the second bridge arm converter is connected with a positive electrode of the second battery module, and a second end of the second bridge arm converter is connected with a negative electrode of the first battery module;
the controller is specifically configured to, when the voltage of the first battery module and the voltage of the second battery module are unequal, control an upper bridge switch transistor and a lower bridge switch transistor of the second bridge arm converter to be alternately turned on to alternately charge and discharge the first battery module and the second battery module.

In an embodiment, the controller is specifically configured to:
in a first time sequence of a preset voltage equalization time sequence, control the upper bridge switch transistor of the first bridge arm converter to be turned on, the first battery, the first motor winding and the first bridge arm converter form a first path, and the first battery charges the first motor winding;
in a second time sequence of the preset voltage equalization time sequence, control the lower bridge switch transistor of the first bridge arm converter to be turned on, the second battery, the first motor winding and the first bridge arm converter form a second path, and the first motor winding charges the second battery;
wherein the preset voltage equalization time sequence is configured to characterize a control time sequence for alternately charging and discharging the first battery and the second battery in the voltage equalization circuit.

In an embodiment, the voltage equalization circuit further includes: a first change-over switch, a first end of the first change-over switch being connected with the first end of the first motor winding, and a second end of the first change-over switch being connected with the negative electrode of the first battery and the positive electrode of the second battery;
the controller being further connected with the first change-over switch and being configured to control the first change-over switch to be closed before controlling the upper bridge switch transistor and the lower bridge switch transistor of the first bridge arm converter to be alternately turned on to alternately charge and discharge the first battery and the second battery.

In an embodiment, the controller is further configured to acquire the voltage of the first battery and the voltage of the second battery, and determine that the voltage of the first battery and the voltage of the second battery are unequal when the difference between the voltage of the first battery and the voltage of the second battery is greater than a first preset voltage threshold.

In an embodiment, the controller is specifically configured to:
in a third time sequence of the preset voltage equalization time sequence, control the upper bridge switch transistor of the second bridge arm converter to be turned on, and the second battery module, the second motor winding and the second bridge arm converter form a third path, and the second battery module charges the second motor winding;
in a fourth time sequence of the preset voltage equalization time sequence, control the lower bridge switch transistor of the second bridge arm converter to be turned on, and the first battery module, the second motor winding and the second bridge arm converter form a fourth path, and the second motor winding charges the first battery module;
wherein the preset voltage equalization time sequence is configured to characterize a control time sequence for alternately charging and discharging the first battery module and the second battery module in the voltage equalization circuit.

In an embodiment, the controller is further configured to acquire the voltage of the first battery module and the voltage of the second battery module, and determine that the voltage of the first battery module and the voltage of the second battery module are unequal when the difference between the voltage of the second battery module and the voltage of the first battery module is greater than a second preset voltage threshold.

In an embodiment, the voltage equalization circuit further includes: a second change-over switch, a first end of the second change-over switch being connected with the first end of the second motor winding, and a second end of the second change-over switch being connected with the first end of the first bridge arm converter, the positive electrode of the first battery module and the negative electrode of the second battery module;
the controller being further connected with the second change-over switch, and being configured to control the second change-over switch to be closed before controlling the upper bridge switch transistor and the lower bridge switch transistor of the second bridge arm converter to be alternately turned on to alternately charge and discharge the first battery module and the second battery module.

In an embodiment, the second battery is configured to be connected with a low-voltage electric device to supply power for the low-voltage electric device.

A second aspect of the present disclosure provides a vehicle, including the voltage equalization circuit according to the first aspect.

According to the technical solution, the voltage equalization circuit includes the controller, the first motor electronic control assembly and the first battery module; the first motor electronic control assembly includes the first motor winding and the first bridge arm converter, and the first battery module includes the first battery and the second battery connected in series; the controller is connected with the first bridge arm converter and configured to, when the voltage of the first battery and the voltage of the second battery are unequal, charge or discharge the first motor winding by controlling the first bridge arm converter to equalize the voltage of the first battery and the voltage of the second battery, so that the first motor winding can be charged or discharged by controlling the first bridge arm converter, the voltage of the first battery and the voltage of the second battery are equalized, thereby improving the service life of the battery and being conducive to improving the performance of the vehicle.

Other features and advantages of the present disclosure will be illustrated in detail in the following detailed description.

### BRIEF DESCRIPTION OF THE DRAWINGS

The accompanying drawings are intended to provide a further understanding of the disclosure, and constitute a part of the specification, together with the following detailed description, serve to explain the present disclosure, but do not constitute the limitation of the disclosure. In the drawings:
FIG. 1 is a schematic diagram of a voltage equalization circuit according to an exemplary embodiment of the present disclosure;
FIG. 2 is a schematic diagram of a voltage equalization circuit according to the embodiment shown in FIG. 1;
FIG. 3 is a schematic diagram of another voltage equalization circuit according to an exemplary embodiment of the present disclosure;
FIG. 4 is a schematic diagram of the current flow direction of a voltage equalization circuit according to the embodiment shown in FIG. 3;
FIG. 5 is a schematic diagram of the current flow direction of another voltage equalization circuit according to the embodiment shown in FIG. 3;
FIG. 6 is a schematic diagram of the current flow direction of another voltage equalization circuit according to the embodiment shown in FIG. 3;
FIG. 7 is a schematic diagram of the current flow direction of another voltage equalization circuit according to the embodiment shown in FIG. 3;
FIG. 8 is a schematic diagram of a voltage equalization circuit according to the embodiment shown in FIG. 2;
FIG. 9 is a schematic diagram of a voltage equalization circuit according to the embodiment shown in FIG. 3;
FIG. 10 is a block diagram of a vehicle according to an exemplary embodiment of the present disclosure.

### DETAILED DESCRIPTION

The specific embodiments of the present disclosure are described below in detail with reference to the accompanying drawings. It should be understood that the specific embodiments described herein are only used to illustrate and explain the present disclosure, and are not used to limit the present disclosure.

Before the specific embodiments of the present disclosure are described in detail, the application scenarios of the present disclosure are first described as follows. The present disclosure can be applied to a vehicle. The vehicle includes a plurality of low-voltage power supply platforms. An isolated buck DC/DC converter is connected between each platform and a vehicle battery. For example, the vehicle can include a 12V power supply platform and a 48V power supply platform. The 12V power supply platform is connected with a high-voltage power battery of the vehicle through a first isolated buck DC/DC converter and is configured to supply power to a 12V load of the vehicle. The 48V power supply platform is connected with the high-voltage power battery of the vehicle through a second isolated buck DC/DC converter and is configured to supply power to the 12V load of the vehicle. As a result, the manufacturing cost of the vehicle is greatly increased. In the present disclosure, the 48V power supply platform is connected with the vehicle battery. As a result, the electrical energy of the cells connected with the 48V power supply platform in the vehicle battery is consumed faster than the electrical energy of the cells other than the cells connected with the 48V power supply platform. Therefore, the voltage of the vehicle battery is unequal.

In order to solve the above technical problem, the present disclosure provides a voltage equalization circuit and a vehicle. the voltage equalization circuit includes a controller, a first motor electronic control assembly and a first battery module; the first motor electronic control assembly includes a first motor winding and a first bridge arm converter, and the first battery module includes a first battery and a second battery connected in series; the controller is connected with the first bridge arm converter and configured to, when a voltage of the first battery and a voltage of the second battery are unequal, charge or discharge the first motor winding by controlling the first bridge arm converter to equalize the voltage of the first battery and the voltage of the second battery, so that the first motor winding can be charged or discharged by controlling the first bridge arm converter, the voltage of the first battery and the voltage of the second battery are equalized, thereby improving the service life of the battery and being conducive to improving the performance of the vehicle.

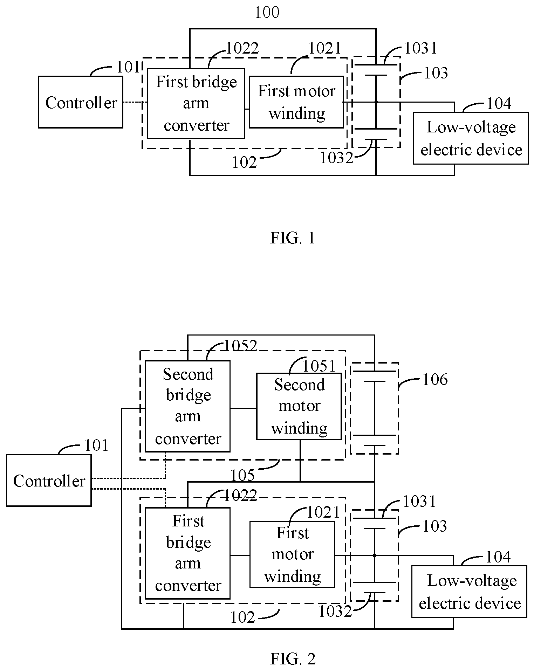

FIG. 1 is a schematic diagram of a voltage equalization circuit according to an exemplary embodiment of the present disclosure, as shown in FIG. 1, the voltage equalization circuit includes: a controller 101, a first motor electronic control assembly 102 and a first battery module 103; the first motor electronic control assembly 102 including a first motor winding 1021 and a first bridge arm converter 1022, and the first battery module 103 including a first battery 1031 and a second battery 1032 connected in series; the controller 101 being connected with the first bridge arm converter 1022 and being configured to, when a voltage of the first battery 1031 and a voltage of the second battery 1032 are unequal, charge or discharge the first motor winding 1021 by controlling the first bridge arm converter 1022 to equalize the voltage of the first battery 1031 and the voltage of the second battery 1032.

The second battery 1032 is configured to be connected with the low-voltage electric device 104 to supply power to the low-voltage electric device. The first motor electronic control assembly 102 can include a motor converter and a motor, the motor converter can include a plurality of bridge arms, the motor can include a plurality of windings, the midpoints of the plurality of bridge arms are connected with the windings corresponding to the bridge arms, the first motor winding 1021 can be any one winding or any plurality of windings of the motor, and the first bridge arm converter 1022 can be any one bridge arm or any plurality of bridge arms of the motor converter. The controller 101 can be a BMS (Battery Management System) or a pre-installed control device, and the control device is configured to control a switch transistor in the voltage equalization circuit to turn on the voltage equalization circuit. The low-voltage electric device can be 12V or 48V electric device. The switch transistor can be a MOSFET (Metal-Oxide-Semiconductor Field-Effect Transistor), a BJT (Bipolar Junction Transistor), a JFET (Junction Field-Effect Transistor), or an IGBT (Insulate-Gate Bipolar Transistor).

It should be noted that the first battery 1031 and the second battery 1032 can be connected in series to form the first battery module 103 to supply power to a vehicle load, a first end of the low-voltage electric device 104 can be connected with a positive electrode of the second battery 1032, a second end of the low-voltage electric device 104 can be connected with a negative electrode of the second battery 1032, the second battery 1032 supplies power to the low-voltage electric device, so that power consumption of the second battery 1032 is greater than power consumption of the first battery 1031, and thus the voltage of the first battery 1031 is greater than the voltage of the second battery 1032. The controller 101 can control the first bridge arm converter 1022 to be turned on to charge or discharge the first motor winding 1021, the first battery 1031 charges the first motor winding 1021 when the first motor winding 1021 and the first battery 1031 form a path, and the first motor winding 1021 discharges to the second battery 1032 when the first motor winding 1021 and the second battery 1032 form a path.

In an embodiment, as shown in FIG. 1, the first end of the first motor winding 1021 is connected with the negative electrode of the first battery 1031 and the positive electrode of the second battery 1032, and the second end of the first motor winding 1021 is connected with the midpoint of the first bridge arm converter 1022; the first end of the first bridge arm converter 1022 is connected with the positive electrode of the first battery 1031, and the second end of the first bridge arm converter 1022 is connected with the negative electrode of the second battery 1032; the controller 101 is specifically configured to, when the voltage of the first battery 1031 and the voltage of the second battery 1032 are unequal, control the upper bridge switch transistor and the lower bridge switch transistor of the first bridge arm converter 1022 to be alternately turned on to alternately charge and discharge the first battery 1031 and the second battery 1032.

It should be noted that when the controller 101 determines that the voltage of the first battery 1031 and the voltage of the second battery 1032 are unequal, the controller 101 can control the upper bridge switch transistor of the first bridge arm converter 1022 to be turned on and the lower bridge switch transistor of the first bridge arm converter 1022 to be turned off, the first battery 1031 and the first motor winding 1021 form a first path, and the first battery 1031 charges the first motor winding 1021; the controller 101 can control the upper bridge switch transistor of the first bridge arm converter 1022 to be turned off and the lower bridge switch transistor of the first bridge arm converter 1022 to be turned on, the second battery 1032 and the first motor winding 1021 form a second path, and the first motor winding 1021 charges the second battery 1032, thereby equalizing the voltage of the first battery 1031 and the voltage of the second battery 1032.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, the controller 101 is specifically configured to: in a first time sequence of a preset voltage equalization time sequence, control the upper bridge switch transistor of the first bridge arm converter 1022 to be turned on, the first battery 1031, the first motor winding 1021 and the first bridge arm converter 1022 form the first path, and the first battery 1031 charges the first motor winding 1021; in a second time sequence of the preset voltage equalization time sequence, control the lower bridge switch transistor of the first bridge arm converter 1022 to be turned on, the second battery 1032, the first motor winding 1021 and the first bridge arm converter 1022 form the second path, and the first motor winding 1021 charges the second battery 1032.

The preset voltage equalization time sequence is configured to characterize a control time sequence for alternately charging and discharging the first battery 1031 and the second battery 1032 in the voltage equalization circuit. The first time sequence and the second time sequence can be of the same duration or different durations, and the first time sequence and the second time sequence are alternately switched to alternately turn on the upper bridge switch transistor and the lower bridge switch transistor of the first bridge arm converter 1022. For example, the duration of the first time sequence can be t1, and the duration of the second time sequence can be t2, where t1 can be equal to t2 or not equal to t2, and the sum of t1 and t2 can be a period T. In t1 of the first period T1, the preset voltage equalization time sequence is in the first time sequence, after t1, the first period T1 enters t2, in t2 of the first period T1, the preset voltage equalization time sequence is in the second time sequence, after t2, it enters t1 of a second period T2, and the first time sequence and the second time sequence in the preset voltage equalization time sequence are alternately switched in this way.

It should be noted that the controller 101 controls the upper bridge switch transistor and the lower bridge switch transistor of the first bridge arm converter 1022 to be alternately turned on in a preset voltage equalization time sequence when it is determined that the voltage of the first battery 1031 and the voltage of the second battery 1032 are unequal. In the first time sequence of the preset voltage equalization time sequence, the controller 101 controls the upper bridge switch transistor of the first bridge arm converter 1022 to be turned on and the lower bridge switch transistor to be turned off, and in the second time sequence of the preset voltage equalization time sequence, the controller 101 controls the upper bridge switch transistor of the first bridge arm converter 1022 to be turned off and the lower bridge switch transistor to be turned on.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, the controller 101 is further configured to acquire the voltage of the first battery 1031 and the voltage of the second battery 1032, and determine that the voltage of the first battery 1031 and the voltage of the second battery 1032 are unequal when the difference between the voltage of the first battery 1031 and the voltage of the second battery 1032 is greater than a first preset voltage threshold.

The first preset voltage threshold can be understood as a preset maximum value of the difference between the voltage of the first battery 1031 and the voltage of the second battery 1032, and the first preset voltage threshold can be set according to a range of voltage differences allowed to exist between vehicle batteries. For example, the range of voltage differences allowed to exist between vehicle batteries is 5V to 10V, and the first preset voltage threshold can be 4V, 6V, or 8V, but cannot be greater than or equal to 10V.

It should be noted that the voltage of the first battery 1031 and the voltage of the second battery 1032 can be detected by a voltage sensor arranged at the first battery 1031 and the second battery 1032, the voltage sensor transmits the detected voltage of the first battery 1031 and the voltage of the second battery 1032 to the controller 101, the controller 101 receives the voltage of the first battery 1031 and the voltage of the second battery 1032, and determines whether the voltage of the first battery 1031 and the voltage of the second battery 1032 are equal according to the received voltage. The arrangement manner of the voltage sensor for detecting the voltage of the vehicle battery is a common technical means in the field, and there are many sensor arrangement embodiments in the prior art, and the specific sensor arrangement embodiment is not limited in the present disclosure.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

FIG. 2 is a schematic diagram of a voltage equalization circuit according to the embodiment shown in FIG. 1, As shown in FIG. 2, The voltage equalization circuit further includes: a second motor electronic control assembly 105 and a second battery module 106, the second motor electronic control assembly 105 including a second motor winding 1051 and a second bridge arm converter 1052; the controller 101 being further connected with the second bridge arm converter 1052 and being configured to, when the voltage of the first battery module 103 and the voltage of the second battery module 106 are unequal, charge or discharge the second motor winding 1051 by controlling the second bridge arm converter 1052 to equalize the voltage of the first battery module 103 and the voltage of the second battery module 106.

The second motor electronic control assembly 105 can include a motor converter and a motor, the motor converter can include a plurality of bridge arms, the motor can include a plurality of windings, the midpoints of the plurality of bridge arms are connected with the windings corresponding to the bridge arms, the second motor winding 1051 can be any one winding or any plurality of windings of the motor, and the second bridge arm converter 1052 can be any one bridge arm or any plurality of bridge arms of the motor converter.

It should be noted that the first battery module 103 and the second battery module 106 can be connected in series to form a high-voltage battery, and the high-voltage battery can be configured to supply power to a high-voltage load of the vehicle. The controller 101 can control the second bridge arm converter 1052 to be turned on to charge or discharge the second motor winding 1051, and the second battery module 106 charges the second motor winding 1051 when the second motor winding 1051 and the second battery module 106 form a path, and the second motor winding 1051 discharges to the first battery module 103 when the second motor winding 1051 and the first battery module 103 form a path.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, as shown in FIG. 2, the first end of the second motor winding 1051 is connected with the negative electrode of the second battery module 106, and the second end of the second motor winding 1051 is connected with the midpoint of the second bridge arm converter 1052; the first end of the second bridge arm converter 1052 is connected with the positive electrode of the second battery module 106, and the second end of the second bridge arm converter 1052 is connected with the negative electrode of the first battery module 103; the controller 101 is specifically configured to, when the voltage of the first battery module 103 and the voltage of the second battery module 106 are unequal, control the upper bridge switch transistor and the lower bridge switch transistor of the second bridge arm converter 1052 to be alternately turned on to alternately charge and discharge the first battery module 103 and the second battery module 106.

It should be noted that the first end of the second bridge arm converter 1052 can be connected with the positive electrode of the second battery module 106, and the second end of the second bridge arm converter 1052 can be connected with the second end of the first bridge arm converter 1022, the negative electrode of the first battery module 103 and the second end of the low-voltage electric device 104; the first end of the second motor winding 1051 can be connected with the first end of the first bridge arm converter 1022, the positive electrode of the first battery module 103 and the negative electrode of the second battery module 106, and the second end of the second motor winding 1051 can be connected with the midpoint of the second bridge arm converter 1052. When the controller 101 determines that the voltage of the first battery module 103 and the voltage of the second battery module 106 are unequal, the controller 101 can control the upper bridge switch transistor of the second bridge arm converter 1052 to be turned on and the lower bridge switch transistor to be turned off, the second motor winding 1051 and the second battery module 106 form a third path, and the second battery module 106 discharges to the second motor winding 1051; and control the upper bridge switch transistor of the second bridge arm converter 1052 to be turned off and the lower bridge switch transistor to be turned on, the second motor winding 1051 and the first battery module 103 form a fourth path, and the second motor winding 1051 charges the first battery module 103.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, the controller 101 is specifically configured to: in a third time sequence of the preset voltage equalization time sequence, control the upper bridge switch transistor of the second bridge arm converter 1052 to be turned on, and the second battery module 106, the second motor winding 1051 and the second bridge arm converter 1052 form a third path, and the second battery module 106 charges the second motor winding 1051; in a fourth time sequence of the preset voltage equalization time sequence, control the lower bridge switch transistor of the second bridge arm converter 1052 to be turned on, and the first battery module 103, the second motor winding 1051 and the second bridge arm converter 1052 form a fourth path, and the second motor winding 1051 charges the first battery module 103.

The preset voltage equalization time sequence is configured to characterize a control time sequence for alternately charging and discharging the first battery module 103 and the second battery module 106 in the voltage equalization circuit. The third time sequence and the fourth time sequence can be the same as or different from the first time sequence and the second time sequence in duration. The first time sequence, the second time sequence, the third time sequence and the fourth time sequence are alternately switched, the upper bridge switch transistor and the lower bridge switch transistor of the first bridge arm converter 1022 are alternately turned on, and the upper bridge switch transistor and the lower bridge switch transistor of the second bridge arm converter 1052 are alternately turned on.

It should be noted that the controller 101 controls the upper bridge switch transistor and the lower bridge switch transistor of the second bridge arm converter 1052 to be alternately turned on in a preset voltage equalization time sequence when it is determined that the voltage of the first battery module 103 and the voltage of the second battery module 106 are unequal. In the third time sequence of the preset voltage equalization time sequence, the controller 101 controls the upper bridge switch transistor of the second bridge arm converter 1052 to be turned on and the lower bridge switch transistor to be turned off, and in the fourth time sequence of the preset voltage equalization time sequence, the controller 101 controls the upper bridge switch transistor of the second bridge arm converter 1052 to be turned off and the lower bridge switch transistor to be turned on.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, the controller 101 is further configured to acquire the voltage of the first battery module 103 and the voltage of the second battery module 106, and determine that the voltage of the first battery module 103 and the voltage of the second battery module 106 are unequal when the controller 101 determines that the difference between the voltage of the second battery module 106 and the voltage of the first battery module 103 is greater than a second preset voltage threshold.

It should be noted that the voltage of the first battery module 103 and the voltage of the second battery module 106 can be obtained by a voltage sensor arranged at the first battery module 103 and the second battery module 106. The arrangement manner of the voltage sensor for detecting the voltage of the vehicle battery is a common technical means in the field, and there are many sensor arrangement embodiments in the prior art, and the specific sensor arrangement embodiment is not limited in the disclosure.

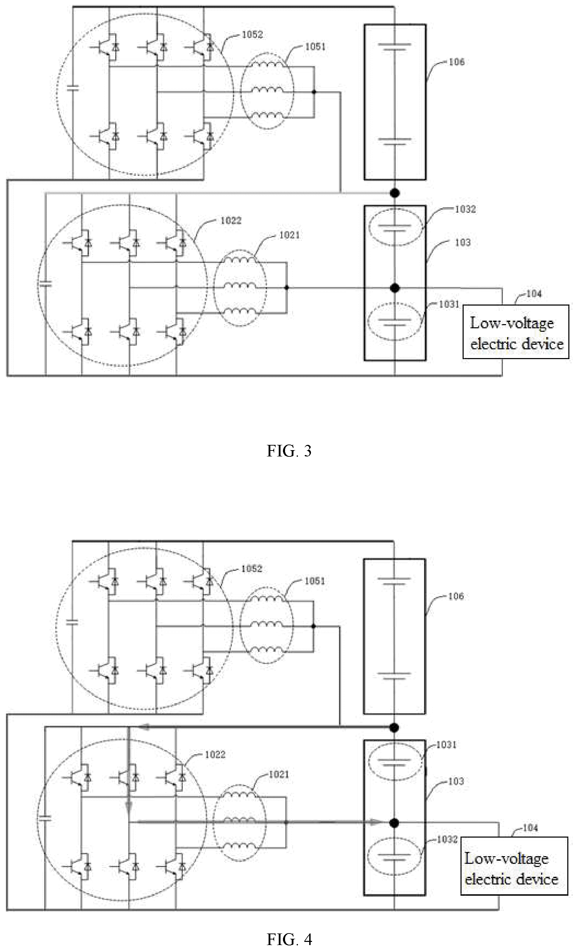

For example, FIG. 3 is a schematic diagram of another voltage equalization circuit according to an exemplary embodiment of the present disclosure. As shown in FIG. 3, the first motor winding 1021 can include a first winding, a second winding and a third winding, and the first end of the first winding, the first end of the second winding and the first end of the third winding are connected together to form a first neutral point. The first bridge arm converter 1022 can include a first bridge arm, a second bridge arm and a third bridge arm, and the first end of the first bridge arm, the first end of the second bridge arm and the first end of the third bridge arm are connected together to form a first bus end, and the second end of the first bridge arm, the second end of the second bridge arm and the second end of the third bridge arm are connected together to form a second bus end. The second motor winding 1051 can include a fourth winding, a fifth winding and a sixth winding, and the first end of the fourth winding, the first end of the fifth winding and the first end of the sixth winding are connected together to form a second neutral point. The second bridge arm converter 1052 can include a fourth bridge arm, a fifth bridge arm and a sixth bridge arm, and the first end of the fourth bridge arm, the first end of the fifth bridge arm and the first end of the sixth bridge arm are connected together to form a third bus end, and the second end of the fourth bridge arm, the second end of the fifth bridge arm and the second end of the sixth bridge arm are connected together to form a fourth bus end. The first neutral point is connected with the negative electrode of the first battery 1031 and the positive electrode of the second battery 1032, the second end of the first winding is connected with the midpoint of the first bridge arm, the second end of the second winding is connected with the midpoint of the second bridge arm, and the second end of the third winding is connected with the midpoint of the third bridge arm. The first bus end is connected with the second neutral point, the positive electrode of the first battery module 103 and the negative electrode of the second battery module 106, the second bus end is connected with the negative electrode of the first battery module 103, the second end of the low-voltage electric device 104 and the fourth bus end. The third bus end is connected with the positive electrode of the second battery module 106, the second end of the fourth winding is connected with the midpoint of the fourth bridge arm, the second end of the fifth winding is connected with the midpoint of the fifth bridge arm, and the second end of the sixth winding is connected with the midpoint of the sixth bridge arm.

FIG. 4 is a schematic diagram of the current flow direction of a voltage equalization circuit according to the embodiment shown in FIG. 3; As shown in FIG. 4, when it is determined that it is in the first time sequence of the preset voltage equalization time sequence, the controller 101 controls the upper bridge switch transistor of the first bridge arm, the upper bridge switch transistor of the second bridge arm and the upper bridge switch transistor of the third bridge arm to be turned on, and controls the lower bridge switch transistor of the first bridge arm, the lower bridge switch transistor of the second bridge arm and the lower bridge switch transistor of the third bridge arm to be turned off, the first battery 1031, the first winding, the second winding and the third winding form a loop, and the first battery 1031 discharges to the first winding, the second winding and the third winding.

It should be noted that when it is determined that it is in the first time sequence of the preset voltage equalization time sequence, at least one of the upper bridge switch transistor of the first bridge arm, the upper bridge switch transistor of the second bridge arm and the upper bridge switch transistor of the third bridge arm can be turned on.

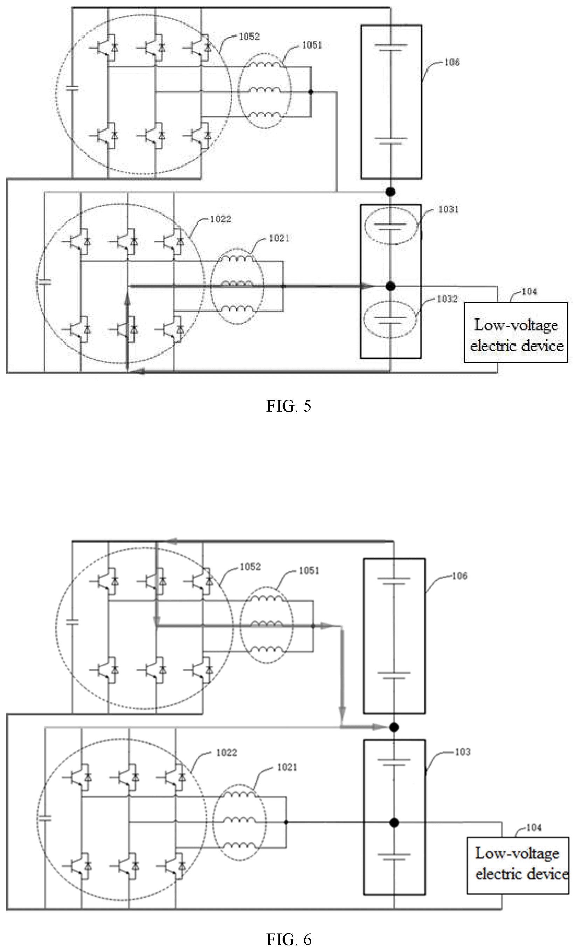

FIG. 5 is a schematic diagram of the current flow direction of another voltage equalization circuit according to the embodiment shown in FIG. 3; As shown in FIG. 5, when it is determined that it is in the second time sequence of the preset voltage equalization time sequence, the controller 101 controls the upper bridge switch transistor of the first bridge arm, the upper bridge switch transistor of the second bridge arm, and the upper bridge switch transistor of the third bridge arm to be turned on, the lower bridge switch transistor of the first bridge arm, the lower bridge switch transistor of the second bridge arm, and the lower bridge switch transistor of the third bridge arm to be turned off, and the first winding, the second winding, and the third winding to charge the second battery 1032.

It should be noted that when it is determined that it is in the second time sequence of the preset voltage equalization time sequence, at least one of the lower bridge switch transistor of the first bridge arm, the upper bridge switch transistor of the second bridge arm, and the upper bridge switch transistor of the third bridge arm can be turned on.

FIG. 6 is a schematic diagram of current flow direction of still another voltage equalization circuit according to the embodiment shown in FIG. 3. As shown in FIG. 6, when it is determined that it is in the third time sequence of the preset voltage equalization time sequence, the controller 101 controls the upper bridge switch transistor of the fourth bridge arm, the upper bridge switch transistor of the fifth bridge arm, and the upper bridge switch transistor of the sixth bridge arm to be turned on, the lower bridge switch transistor of the fourth bridge arm, the lower bridge switch transistor of the fifth bridge arm, and the lower bridge switch transistor of the sixth bridge arm to be turned off, and the second battery module 106 discharges to the fourth winding, the fifth winding, and the sixth winding.

It should be noted when it is determined that it is in the third time sequence of the preset voltage equalization time sequence, at least one of the upper bridge switch transistor of the fourth bridge arm, the upper bridge switch transistor of the fifth bridge arm, and the upper bridge switch transistor of the sixth bridge arm can be turned on.

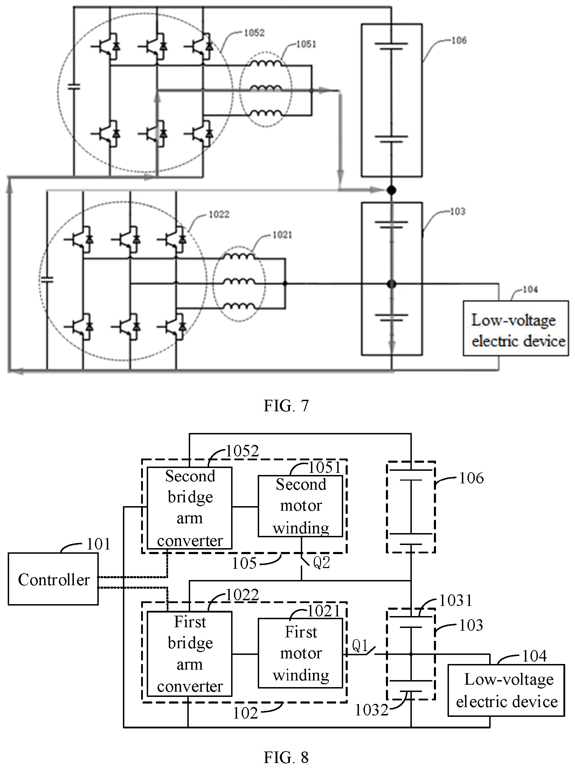

FIG. 7 is a schematic diagram of current flow direction of still another voltage equalization circuit according to the embodiment shown in FIG. 3. As shown in FIG. 7, when it is determined that it is in the fourth time sequence of the preset voltage equalization time sequence, the controller 101 controls the upper bridge switch transistor of the fourth bridge arm, the upper bridge switch transistor of the fifth bridge arm, and the upper bridge switch transistor of the sixth bridge arm to be turned off, the lower bridge switch transistor of the fourth bridge arm, the lower bridge switch transistor of the fifth bridge arm, and the lower bridge switch transistor of the sixth bridge arm to be turned on, and the fourth winding, the fifth winding, and the sixth winding charge the second battery module 106.

It should be noted when it is determined that it is in the fourth time sequence of the preset voltage equalization time sequence, at least one of the lower bridge switch transistor of the fourth bridge arm, the lower bridge switch transistor of the fifth bridge arm, and the lower bridge switch transistor of the sixth bridge arm can be turned on.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

FIG. 8 is a schematic diagram of a voltage equalization circuit according to the embodiment shown in FIG. 2; The voltage equalization circuit further includes: a first change-over switch Q1, the first end of the first change-over switch Q1 being connected with the first end of the first motor winding 1021, and the second end of the first change-over switchQ1 being connected with the negative electrode of the first battery 1031 and the positive electrode of the second battery 1032; the controller 101 being further connected with the first change-over switch Q1 and being configured to control the first change-over switch Q1 to be closed before controlling the upper bridge switch transistor and the lower bridge switch transistor of the first bridge arm converter to be alternately turned on to alternately charge and discharge the first battery and the second battery.

The first change-over switch can be a MOSFET (Metal-Oxide-Semiconductor Field-Effect Transistor), a BJT (Bipolar Junction Transistor), a JFET (Junction Field-Effect Transistor), or an IGBT (Insulate-Gate Bipolar Transistor).

It should be noted that the controller 101 can be configured to control the first change-over switch Q1 to be opened when the first motor winding 1021 is in a driving mode, and control the first change-over switch Q1 to be closed when the first motor winding 1021 is in a voltage equalization mode, so that the first bridge arm converter 1022, the first motor winding 1021, and the first battery module 103 are conducted. The driving mode can be a mode in which the first motor winding 1021 is configured to convert electric energy into mechanical energy to drive a vehicle, and the voltage equalization mode can be a mode in which the first motor winding 1021 is configured to store electric energy and transfer the stored electric energy to the second battery 1032 to equalize the voltage of the first battery 1031 and the voltage of the second battery 1032.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

In an embodiment, as shown in FIG. 8, the voltage equalization circuit further includes: a second change-over switch Q2, the first end of the second change-over switch Q2 being connected with the first end of the second motor winding 1051, and the second end of the second change-over switch Q2 being connected with the first end of the first bridge arm converter 1022, the positive electrode of the first battery module 103 and the negative electrode of the second battery module 106; the controller being further connected with the second change-over switch Q2, and being configured to control the second change-over switch to be closed before controlling the upper bridge switch transistor and the lower bridge switch transistor of the second bridge arm converter to be alternately turned on to alternately charge and discharge the first battery module and the second battery module.

The second change-over switch can be a MOSFET (Metal-Oxide-Semiconductor Field-Effect Transistor), a BJT (Bipolar Junction Transistor), a JFET (Junction Field-Effect Transistor), or an IGBT (Insulate-Gate Bipolar Transistor).

It should be noted that the controller 101 can be configured to control the second change-over switch Q2 to be opened when the second motor winding 1051 is in a driving mode, and control the second change-over switch Q2 to be closed when the second motor winding 1051 is in a voltage equalization mode, so as to conduct the second bridge arm converter 1052, the second motor winding 1051, and the second battery module 106, or conduct the second bridge arm converter 1052, the second motor winding 1051, and the first battery module 103. The driving mode can be a mode in which the second motor winding 1051 is configured to convert electric energy into mechanical energy to drive a vehicle, and the voltage equalization mode can be a mode in which the second motor winding 1051 is configured to store electric energy and transfer the stored electric energy to the second battery 1032 to equalize the voltage of the first battery module 103 and the voltage of the second battery module 106.

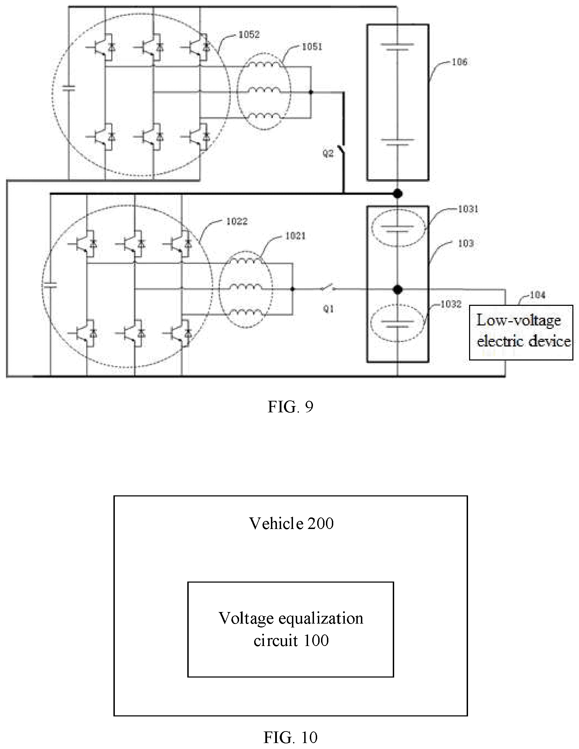

FIG. 9 is a schematic diagram of a voltage equalization circuit according to the embodiment shown in FIG. 3, As shown in FIG. 9, the first end of the first change-over switch Q1 is connected with the first neutral point, and the second end of the first change-over switch Q1 is connected with the negative electrode of the first battery 1031 and the positive electrode of the second battery 1032. The first end of the second change-over switch Q2 is connected with the second neutral point, and the second end of the second change-over switch Q2 is connected with the second bus end, the positive electrode of the first battery module 103, and the negative electrode of the second battery module 106. When the first change-over switch Q1 is turned on, the first winding of the first motor winding 1021, the first bridge arm of the first bridge arm converter 1022, and the first battery module 103, the second winding of the first motor winding 1021, the second bridge arm of the first bridge arm converter 1022, and the first battery module 103, and the third winding of the first motor winding 1021, the third bridge arm of the first bridge arm converter 1022, and the first battery module 103 can form one or more paths, so that the voltage equalization circuit realizes voltage equalization of the first battery and the second battery. When the second change-over switch Q2 is turned on, the first winding of the second motor winding 1051, the first bridge arm of the second bridge arm converter 1052, and the second battery module 106, the second winding of the first motor winding 1021, the second bridge arm of the second bridge arm converter 1052, and the second battery module 106, and the third winding of the second motor winding 1051, the third bridge arm of the second bridge arm converter 1052, and the second battery module 106 can form one or more paths, or the first winding of the second motor winding 1051, the first bridge arm of the second bridge arm converter 1052, and the first battery module 103, the second winding of the first motor winding 1021, the second bridge arm of the second bridge arm converter 1052, and the first battery module 103, and the third winding of the second motor winding 1051, the third bridge arm of the second bridge arm converter 1052, and the first battery module 103 can form one or more paths, so that the voltage equalization circuit realizes voltage equalization of the first battery module 103 and the second battery module 106.

According to the above technical solution, by connecting the second battery with the low-voltage electric device, the use of the isolated buck DC/DC converter can be reduced, the manufacturing cost of the vehicle can be reduced, and the first motor winding is charged or discharged by controlling the first bridge arm converter to equalize the voltage of the first battery and the voltage of the second battery, thereby effectively avoiding the voltage of the second battery from being unequal to the voltage of the first battery due to the connection of the second battery with the low-voltage electric device, improving the service life of the battery, and being conducive to improving the performance of the vehicle.

FIG. 10 is a block diagram of a vehicle according to an exemplary embodiment of the present disclosure. As shown in FIG. 10, the vehicle includes the voltage equalization circuit described above in FIGS. 1 to 9.

The preferred embodiments of the present disclosure are described in detail above with reference to the drawings, but the present disclosure is not limited to the specific details in the above embodiments. Within the technical concept of the present disclosure, various simple modifications can be made to the technical solution of the present disclosure, and these simple modifications all belong to the protection scope of the present disclosure.

In addition, it should be noted that each of the technical features described in the above embodiments can be combined by any appropriate manner without contradiction. In order to avoid unnecessary repetition, the present disclosure will not describe various possible combinations again.

In addition, any combination of the various embodiments of the present disclosure can also be made as long as it does not deviate from the idea of the present disclosure, and it should also be considered as disclosed by the present disclosure.

## Claims

1. A voltage equalization circuit (100), comprising: a controller (101), a first motor electronic control assembly (102) and a first battery module (103); the first motor electronic control assembly (102) comprising a first motor winding (1021) and a first bridge arm converter (1022), and the first battery module (103) comprising a first battery (1031) and a second battery (1032) connected in series;
the controller (101) being connected with the first bridge arm converter (1022) and being configured to, when a voltage of the first battery (1031) and a voltage of the second battery (1032) are unequal, charge or discharge the first motor winding (1021) by controlling the first bridge arm converter (1022) to equalize the voltage of the first battery (1031) and the voltage of the second battery (1032).

2. The voltage equalization circuit (100) according to claim 1, wherein a first end of the first motor winding (1021) is connected with a negative electrode of the first battery (1031) and a positive electrode of the second battery (1032), and a second end of the first motor winding (1021) is connected with a midpoint of the first bridge arm converter (1022);
a first end of the first bridge arm converter (1022) is connected with a positive electrode of the first battery (1031), and a second end of the first bridge arm converter (1022) is connected with a negative electrode of the second battery (1032);
the controller (101) is specifically configured to, when the voltage of the first battery (1031) and the voltage of the second battery (1032) are unequal, control an upper bridge switch transistor and a lower bridge switch transistor of the first bridge arm converter (1022) to be alternately turned on to alternately charge and discharge the first battery (1031) and the second battery (1032).

3. The voltage equalization circuit (100) according to claim 1 or 2, further comprising:
a second motor electronic control assembly (105) and a second battery module (106), the second motor electronic control assembly (105) comprising a second motor winding (1051) and a second bridge arm converter (1052);
the controller (101) being further connected with the second bridge arm converter (1052) and being configured to, when the voltage of the first battery module (103) and the voltage of the second battery module (106) are unequal, charge or discharge the second motor winding (1051) by controlling the second bridge arm converter (1052) to equalize the voltage of the first battery module (103) and the voltage of the second battery module (106).

4. The voltage equalization circuit (100) according to claim 3, wherein a first end of the second motor winding (1051) is connected with a negative electrode of the second battery module (106), and a second end of the second motor winding (1051) is connected with a midpoint of the second bridge arm converter (1052);
a first end of the second bridge arm converter (1052) is connected with a positive electrode of the second battery module (106), and a second end of the second bridge arm converter (1052) is connected with a negative electrode of the first battery module (103);
the controller (101) is specifically configured to, when the voltage of the first battery module (103) and the voltage of the second battery module (106) are unequal, control an upper bridge switch transistor and a lower bridge switch transistor of the second bridge arm converter (1052) to be alternately turned on to alternately charge and discharge the first battery module (103) and the second battery module (106).

5. The voltage equalization circuit (100) according to any one of claims 1 to 4, wherein the controller (101) is specifically configured to:
in a first time sequence of a preset voltage equalization time sequence, control the upper bridge switch transistor of the first bridge arm converter (1022) to be turned on, the first battery (1031), the first motor winding (1021) and the first bridge arm converter (1022) form a first path, and the first battery (1031) charges the first motor winding (1021);
in a second time sequence of the preset voltage equalization time sequence, control the lower bridge switch transistor of the first bridge arm converter (1022) to be turned on, the second battery (1032), the first motor winding (1021) and the first bridge arm converter (1022) form a second path, and the first motor winding (1021) charges the second battery (1032);
the preset voltage equalization time sequence is configured to characterize a control time sequence for alternately charging and discharging the first battery (1031) and the second battery (1032) in the voltage equalization circuit.

6. The voltage equalization circuit (100) according to any one of claims 1 to 5, further comprising: a first change-over switch (Q1), a first end of the first change-over switch (Q1) being connected with the first end of the first motor winding (1021), and a second end of the first change-over switch (Q1) being connected with the negative electrode of the first battery (1031) and the positive electrode of the second battery (1032);
the controller (101) being further connected with the first change-over switch (Q1) and being configured to control the first change-over switch (Q1) to be closed before controlling the upper bridge switch transistor and the lower bridge switch transistor of the first bridge arm converter (1022) to be alternately turned on to alternately charge and discharge the first battery (1031) and the second battery (1032).

7. The voltage equalization circuit (100) according to any one of claims 1 to 6, wherein the controller (101) is further configured to acquire the voltage of the first battery (1031) and the voltage of the second battery (1032), and determine that the voltage of the first battery (1031) and the voltage of the second battery (1032) are unequal when the difference between the voltage of the first battery (1031) and the voltage of the second battery (1032) is greater than a first preset voltage threshold.

8. The voltage equalization circuit (100) according to claim 3 or 4, wherein the controller (101) is specifically configured to:
in a third time sequence of the preset voltage equalization time sequence, control the upper bridge switch transistor of the second bridge arm converter (1052) to be turned on, the second battery module (106), the second motor winding (1051) and the second bridge arm converter (1052) form a third path, and the second battery module (106) charges the second motor winding (1051);
in a fourth time sequence of the preset voltage equalization time sequence, control the lower bridge switch transistor of the second bridge arm converter (1052) to be turned on, the first battery module (103), the second motor winding (1051) and the second bridge arm converter (1052) form a fourth path, and the second motor winding (1051) charges the first battery module (103);
the preset voltage equalization time sequence is configured to characterize a control time sequence for alternately charging and discharging the first battery module (103) and the second battery module (106) in the voltage equalization circuit.

9. The voltage equalization circuit (100) according to claim 3, 4 or 8, wherein the controller (101) is further configured to acquire the voltage of the first battery module (103) and the voltage of the second battery module (106), and determine that the voltage of the first battery module (103) and the voltage of the second battery module (106) are unequal when the difference between the voltage of the second battery module (106) and the voltage of the first battery module (103) is greater than a second preset voltage threshold.

10. The voltage equalization circuit (100) according to claim 3, 4, 8 or 9, further comprising: a second change-over switch (Q2), a first end of the second change-over switch (Q2) being connected with the first end of the second motor winding (1051), and a second end of the second change-over switch (Q2) being connected with the first end of the first bridge arm converter (1022), the positive electrode of the first battery module (103) and the negative electrode of the second battery module (106);
the controller (101) being further connected with the second change-over switch (Q2), and being configured to control the second change-over switch (Q2) to be closed before controlling the upper bridge switch transistor and the lower bridge switch transistor of the second bridge arm converter (1052) to be alternately turned on to alternately charge and discharge the first battery module (103) and the second battery module (106).

11. The voltage equalization circuit (100) according to any one of claims 1 to 10, wherein the second battery (1032) is configured to be connected with a low-voltage electric device (104) to supply power for the low-voltage electric device (104).

12. A vehicle (200), comprising the voltage equalization circuit (100) according to any one of claims 1 to 11.
